# EUROPEAN PATENT APPLICATION

(11) **EP 2 482 512 A2**
(43) Date of publication of application: **01.08.2012**
(21) Application number: 12165838.9
(22) Date of filing: 15.07.2008
(51) Int. Cl.: H04L 27/26, H04W 28/06

(54) **Method and devices for supporting hard handoff**

(30) Priority: 16.07.2007 US 949981 P; 30.06.2008 US 165644
(62) Divisional of application: 08781865.4
(71) Applicant: Qualcomm Incorporated, San Diego, CA 92121-1714 (US)
(72) Inventor: JI, Tingfang, San Diego, CA 92121-1714 (US); NAGUIB, Ayman Fawzy, San Diego, CA 92121-1714 (US); AGRAWAL, Avneesh, San Diego, CA 92121-1714 (US)
(74) Representative: Hohgardt, Martin

(57) **Abstract**

A base station that is configured for supporting hard handoff as well as the corresponding method is described, the method comprises identify a mobile station (120) potentially performing hard handoff to a base station (110), allocate logical resources of the base station (110) to the mobile station (120) prior to the hard handoff and allocate no physical resources of the base station (110) to the mobile station (120) prior to the hard handoff. Also the mobile station (120) and the corresponding method is described.

## Description

### RELATED APPLICATIONS

This application claims the benefit of priority from U.S. Provisional Patent Application Serial No. 60/949,981, filed July 16, 2007 and entitled "Adaptive Transmission of Control Information in a Wireless Communication System," which is fully incorporated herein by reference for all purposes.

### TECHNICAL FIELD

The present disclosure relates generally to communication systems. More specifically, the present disclosure relates to methods and apparatus for adaptive transmission of control information in a wireless communication system.

### BACKGROUND

As used herein, the term "mobile station" refers to an electronic device that may be used for voice and/or data communication over a wireless communication network. Examples of mobile stations include cellular phones, personal digital assistants (PDAs), handheld devices, wireless modems, laptop computers, personal computers, etc. A mobile station may alternatively be referred to as an access terminal, a mobile terminal, a subscriber station, a remote station, a user terminal, a terminal, a subscriber unit, user equipment, etc.

A wireless communication network may provide communication for a number of mobile stations, each of which may be serviced by a base station. A base station may alternatively be referred to as an access point, a Node B, or some other terminology.

A mobile station may communicate with one or more base stations via transmissions on the uplink and the downlink. The uplink (or reverse link) refers to the communication link from the mobile station to the base station, and the downlink (or forward link) refers to the communication link from the base station to the mobile station.

The resources of a wireless communication network (e.g., bandwidth and transmit power) may be shared among multiple mobile stations. A variety of multiple access techniques are known, including code division multiple access (CDMA), time division multiple access (TDMA), frequency division multiple access (FDMA), and orthogonal frequency division multiple access (OFDMA). Benefits may be realized by improved methods and apparatus related to the operation of wireless communication systems.

### BRIEF DESCRIPTION OF THE DRAWINGS

Figure 1 illustrates an example of a wireless communication system;

Figure 2 illustrates an example frame structure for a time division duplex (TDD) mode in WiMAX;

Figure 3 illustrates examples of control information that a base station may send to mobile stations;

Figure 4 illustrates an example of a control structure that may be used to send information to mobile stations;

Figure 5 illustrates another example of a control structure that may be used to send information to mobile stations;

Figure 6 illustrates an example of information that may be included in a pointer for a control segment;

Figure 7 illustrates a single control segment carrying different types of control information;

Figure 8 illustrates a control segment that is partitioned into multiple control subsegments;

Figure 9 illustrates a control segment that includes an information element for each mobile station receiving any control information;

Figure 10 illustrates an example of a power control segment;

Figure 11 illustrates an example of an interference control segment;

Figure 12 illustrates an example of a power control segment;

Figure 13 illustrates an example of a method for sending control information;

Figure 14 illustrates means-plus-function blocks corresponding to the method of Figure 13;

Figure 15 illustrates an example of a method for sending power control information;

Figure 16 illustrates means-plus-function blocks corresponding to the method of Figure 15;

Figure 17 illustrates an example of a method for sending interference management information;

Figure 18 illustrates means-plus-function blocks corresponding to the method of Figure 17;

Figure 19 illustrates an example of a method for sending paging information;

Figure 20 illustrates means-plus-function blocks corresponding to the method of Figure 19;

Figure 21 illustrates an example of a method for receiving control information;

Figure 22 illustrates means-plus-function blocks corresponding to the method of Figure 21;

Figure 23 illustrates an example of a method for supporting hard handoff;

Figure 24 illustrates means-plus-function blocks corresponding to the method of Figure 23;

Figure 25 illustrates an example of a method for performing hard handoff by a mobile station;

Figure 26 illustrates means-plus-function blocks corresponding to the method of Figure 25;

Figure 27 illustrates a block diagram of a design of a base station and a mobile station;

Figure 28 illustrates an example of a base station that is configured for adaptive transmission of control information in a wireless communication system; and

Figure 29 illustrates an example of a mobile station that is configured to facilitate adaptive transmission of control information in a wireless communication system.

### SUMMARY

A base station that is configured for adaptive transmission of control information in a wireless communication system is disclosed. The base station may include a processor. The base station may also include memory that is in electronic communication with the processor. The base station may also include instructions stored in the memory. The instructions may be executable by the processor to generate a control segment carrying control information. The control segment may have a configurable size. The instructions may also be executable to generate a pointer for the control segment. The pointer may indicate a location of the control segment in a downlink subframe. The pointer also may indicate a size of the control segment. The instructions may also be executable by the processor to send the pointer and the control segment.

A method for adaptive transmission of control information in a wireless communication system is disclosed. The method may include generating a control segment carrying control information. The control segment may have a configurable size. The method may also include generating a pointer for the control segment. The pointer may indicate a location of the control segment in a downlink subframe. The pointer may also indicate a size of the control segment. The method may also include sending the pointer and the control segment.

A base station that is configures for adaptive transmission of control information in a wireless communication system is disclosed. The base station may include means for generating a control segment carrying control information. The control segment may have a configurable size. The base station may also include means for generating a pointer for the control segment. The pointer may indicate a location of the control segment in a downlink subframe. The pointer may also indicate a size of control segment. The base station may also include means for sending the pointer and the control segment.

A computer-program product for adaptive transmission of control information in a wireless communication system is disclosed. The computer-program product may include a computer readable medium having instructions thereon. The instructions may include code for generating a control segment carrying control information. The control segment may have a configurable size. The instructions may also include code for generating a pointer for the control segment. The pointer may indicate a location of the control segment in a downlink subframe. The pointer may also indicate a size of the control segment. The instructions may also include code for sending the pointer and the control segment.

A base station that is configured for adaptive transmission of power control information in a wireless communication system is disclosed. The base station may include a processor. The base station may also include memory in electronic communication with the processor. The base station may also include instructions stored in the memory. The instructions may be executable by the processor to generation a control segment carrying power control information for at least one mobile station. The instructions may also be executable by the processor to generate a pointer for the control segment. The instructions may further be executable by the processor to send the pointer and the control segment in a downlink subframe.

A base station that is configured for adaptive transmission of interference management information in a wireless communication system is disclosed. The base station may include a processor. The base station may also include memory in electronic communication with the processor. The base station may also include instructions stored in the memory. The instruction may be executable by the processor to generate a control segment carrying interference management information. The instructions may also be executable by the processor to generate a pointer for the control segment. The instructions may also be executable by the processor to send the pointer and the control segment in a downlink subframe.

A base station that is configured for adaptive transmission of paging information in a wireless communication system is disclosed. The base station may include a processor. The base station may also include memory in electronic communication with the processor. The base station may also include instructions stored in the memory. The instructions may be executable by the processor to generate a control segment carrying paging information for at least one mobile station. The instructions may also be executable by the processor to generate a pointer for the control segment. Further, the instructions may be executable by the processor to send the pointer and the control segment in a downlink subframe.

A mobile station that is configured to facilitate adaptive transmission of the control information in a wireless communication system is disclosed. The mobile station may include a processor. The mobile station may also include memory in electronic communication with processor. The mobile station may also include instructions stored in the memory. The instructions may be executable by the processor to receive a pointer for a control segment carrying control information. The instructions may also be executable by the processor to determine a location of the control segment based on the pointer. The instructions may also be executable by the processor to receive the control segment at the determined location. The instructions may further be executable by the processor to obtain the control information form the control segment.

A method for facilitating adaptive transmission of control information in a wireless communication system is disclosed. The method may include receiving a pointer for a control segment carrying control information. The method may also include determining a location of the control segment based on the pointer. The method may also include receiving the control segment at the determined location. Further, the method may include obtaining the control information from the control segment.

A mobile station that is configured to facilitate adaptive transmission of control information in a wireless communication system is disclosed. The mobile station may include means for receiving a pointer for a control segment carrying control information. The mobile station may also include means for determining a location of the control segment based on the pointer. The mobile station may also include means for receiving the control segment at the determined location. Further, the mobile station may include means for obtaining the control information from the control segment.

A computer-program product for facilitating adaptive transmission of control information in a wireless communication system is disclosed. The computer-program product may include a computer readable medium having instructions thereon. The instructions may include code for receiving a pointer for a control segment carrying control information. The instructions may also include code for determining a location of the control segment based on the pointer. The instructions may also include code for receiving the control segment at the determined location. The instructions may further include code for obtaining the control information for the control segment.

A base station that is configured for supporting hard handoff is disclosed. The base station may include a processor. The base station may also include memory in electronic communication with the processor. The base station may also include instructions stored in the memory. The instructions may be executable by the processor to indentify a mobile station potentially performing hard handoff to a base station. The instructions may also be executable by the processor to allocate logical resources of the base station in the mobile station prior to the hard handoff. The instructions may also be executable to allocate no physical resources of the base station to the mobile station prior to the hard handoff.

A mobile station that is configured for supporting hard handoff is disclosed. The mobile station may include a processor. The mobile station may also include instructions stored in the memory. The instructions may be executable by the processor to identify at least one base station to potentially perform hard handoff. The instructions may also be executable by the processor to receive assignment of logical resources from the at least one base station prior to the hard handoff. The instructions may also be executable to receive no assignment of physical resources from the at least one base station prior to the hard handoff.

### DETAILED DESCRIPTION

The transmission techniques described herein may be used for various communication systems such as Code Division Multiple Access (CDMA) systems, Time Division Multiple Access (TDMA) systems, Frequency Division Multiple Access (FDMA) systems, Orthogonal FDMA (OFDMA) systems, Single-Carrier FDMA (SC-FDMA) systems, Spatial Division Multiple Access (SDMA) systems, multiple-input multiple-output (MIMO) systems, etc. An OFDMA system utilizes Orthogonal Frequency Division Multiplexing (OFDM). An SC-FDMA system utilizes Single-Carrier Frequency Division Multiplexing (SC-FDM). OFDM and SC-FDM partition the system bandwidth into multiple orthogonal subcarriers, which are also referred to as tones, bins, etc. Each subcarrier may be modulated with data. In general, modulation symbols are sent in the frequency domain with OFDM and in the time domain with SC-FDM. An OFDMA system may implement a radio technology such as Evolved UTRA (E-UTRA), IEEE 802.11 (which is also referred to as Wi-Fi), IEEE 802.16 (which is also referred to as WiMAX), IEEE 802.20, Flash-OFDM^{®}, etc. These various radio technologies and standards are known in the art.

For clarity, certain aspects of the present disclosure are described below for use with one or more standards within the WiMAX family of standards. Among others, this can include "Part 16: Air Interface for Fixed and Mobile Broadband Wireless Access Systems," October 1, 2004, and / or in IEEE 802.16e, entitled "Part 16: Air Interface for Fixed and Mobile Broadband Wireless Access Systems; Amendment 2: Physical and Medium Access Control Layers for Combined Fixed and Mobile Operation in Licensed Bands," February 28, 2006. These documents are publicly available.

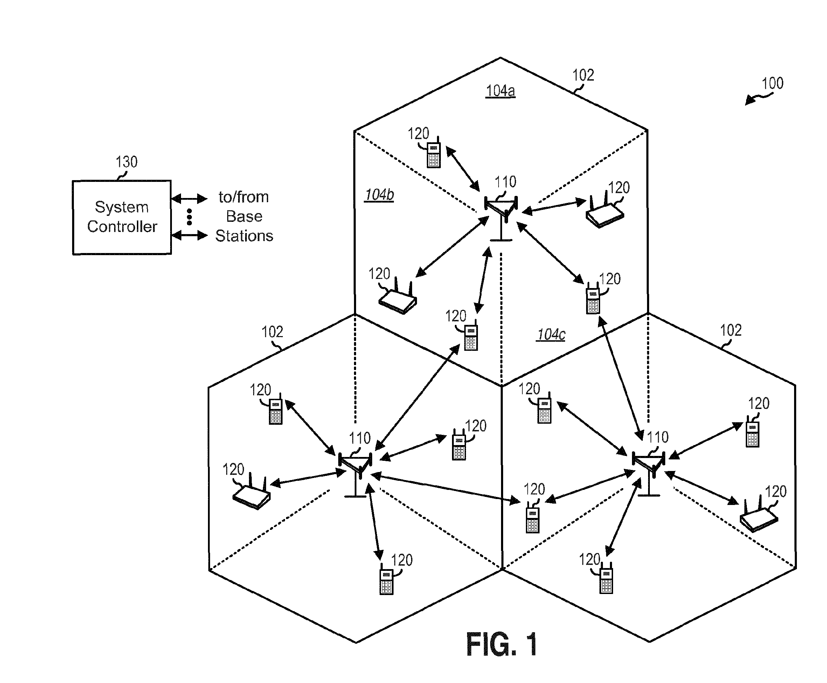

Figure 1 shows a wireless communication system 100 with multiple base stations (BS) 110 and multiple mobile stations (MS) 120. A base station 110 is a station that communicates with the mobile stations 120. A base station 110 may also be called, and may contain some or all of the functionality of, an access point, a Node B, an evolved Node B, etc. Each base station 110 provides communication coverage for a particular geographic area 102. The term "cell" can refer to a base station 110 and/or its coverage area 102 depending on the context in which the term is used. To improve system capacity, a base station coverage area 102 may be partitioned into multiple smaller areas, e.g., three smaller areas 104a, 104b, and 104c. Each smaller area 104ab 104b, 104c may be served by a respective base transceiver station (BTS). The term "sector" can refer to a BTS and/or its coverage area 104 depending on the context in which the term is used. For a sectorized cell, the BTSs for all sectors of that cell are typically co-located within the base station 110 for the cell.

Mobile stations 120 are typically dispersed throughout the system 100, and each mobile station 120 may be stationary or mobile. A mobile station 120 may also be called, and may contain some or all of the functionality of, a terminal, an access terminal, a user equipment, a subscriber unit, a station, etc. A mobile station 120 may be a cellular phone, a personal digital assistant (PDA), a wireless device, a wireless modem, a handheld device, a laptop computer, etc. A mobile station 120 may communicate with zero, one, or multiple base stations 120 on the downlink (DL) and/or uplink (UL) at any given moment. The downlink (or forward link) refers to the communication link from the base stations 110 to the mobile stations 120, and the uplink (or reverse link) refers to the communication link from the mobile stations 120 to the base stations 110.

For a centralized architecture, a system controller 130 may couple to base stations 110 and provide coordination and control for these base stations 110. The system controller 130 may be a single network entity or a collection of network entities. For a distributed architecture, base stations 110 may communicate with one another as needed.

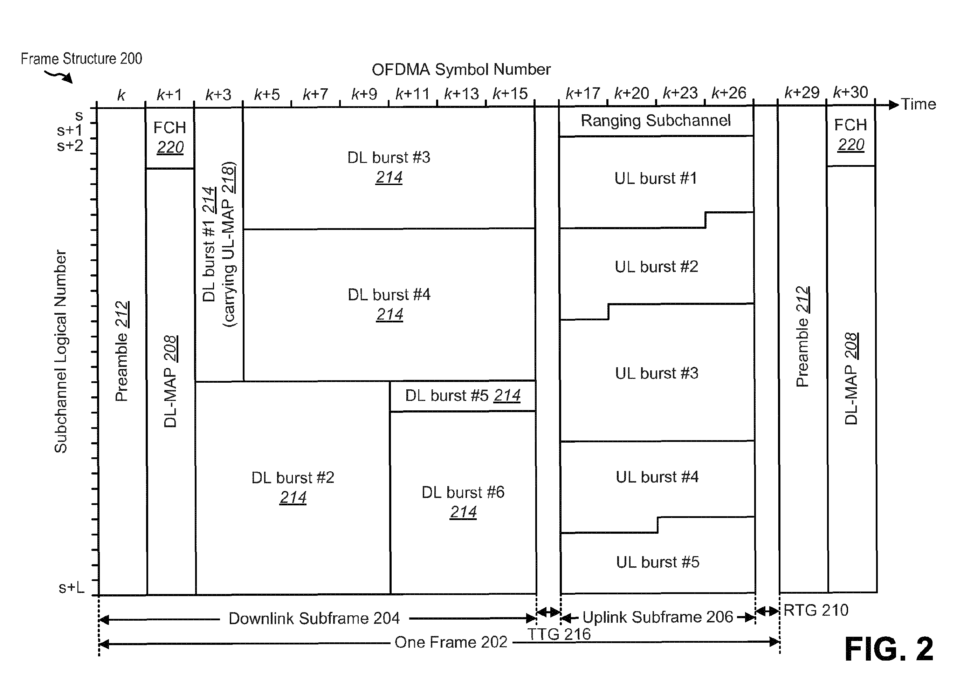

Figure 2 shows an example frame structure 200 for a time division duplex (TDD) mode in WiMAX. The transmission timeline may be partitioned into units of frames 202. Each frame 202 may span a predetermined time duration, e.g., 5 milliseconds (ms), and may be partitioned into a downlink subframe 204 and an uplink subframe 206. The downlink and uplink subframes 204, 206 may be separated by transmission gaps TTG 216 and RTG 210.

A number of physical subchannels may be defined. Each physical subchannel may include a group of subcarriers that may be contiguous or distributed across the system bandwidth. A number of logical subchannels may also be defined and may be mapped to the physical subchannels based on a known mapping. The logical subchannels may simplify the allocation of resources.

As shown in Figure 2, a downlink subframe 204 may include a preamble 212, a frame control header (FCH) 220, a downlink map (DL-MAP) 208, an uplink map (UL-MAP) 218, and downlink (DL) bursts 214. The preamble 212 may carry a known transmission that may be used by the mobile stations 120 for frame detection and synchronization. The FCH 220 may carry parameters used to receive the DL-MAP 208, the UL-MAP 218, and the downlink bursts 214. The DL-MAP 208 may carry a DL-MAP message 208, which may include information elements (IEs) for various types of control information for downlink access. The UL-MAP 218 may carry a UL-MAP message 218, which may include IEs for various types of control information for uplink access. The downlink bursts 214 may carry traffic data for the mobile stations 120 being served.

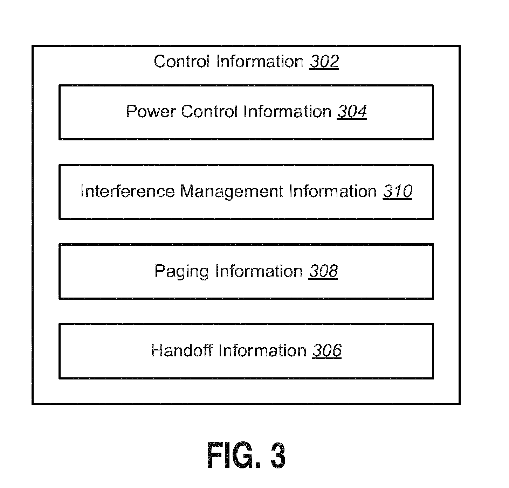

Referring now to Figure 3, a base station 110 may send various types of control information 302 to the mobile stations 120. These various types of control information 302 may include power control (PC) information 304, interference management information 310, paging information 308, handoff information 306, etc. For each type of control information 302, the base station 110 may send information to a specific mobile station 120 using a unicast message, or to a group of mobile stations 120 using a multicast message. The base station 110 may send a message as an information element (IE) in the DL-MAP message 208.

In general, any type of control information 302 may be sent using messages. For example, message-based uplink power control may be employed, and a base station 110 may send a message to one or more mobile stations 120 to adjust the transmit power of the mobile station(s) 120. Message-based uplink power control may have an advantage of flexible resource scheduling compared to designs that define a fixed power control channel for each mobile station 120. However, sending messages for control information 302 may be slow and/or expensive for a system 100 with even a moderate number of active mobile stations 120.

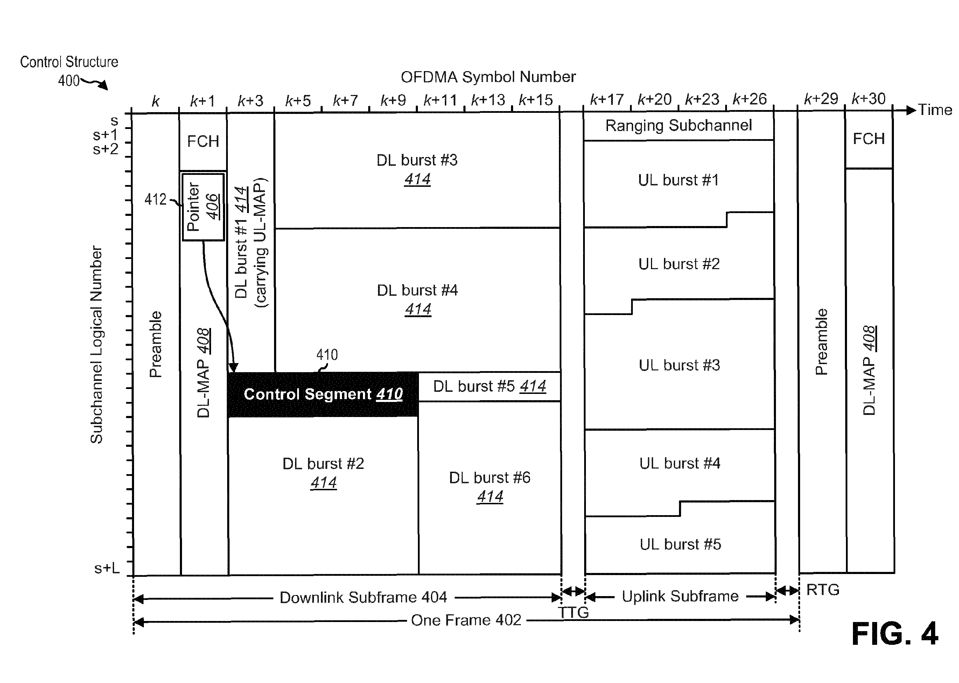

Reference is now made to Figure 4. In accordance with an aspect of the present disclosure, a flexible and efficient control structure 400 may be used to send any type of information to any number of mobile stations 120. In one design, a control segment 410 may be used to send control information 302. A control segment 410 may have any format and size, and may be flexibly defined. A control segment 410 may also be referred to as a control channel, a signaling channel, an overhead channel, a resource block, etc. A control segment 410 may carry control information 302 for individual mobile stations 120, for groups of mobile stations 120, and/or for base stations 110. A pointer 406 may be defined for the control segment 410 and may convey information used to receive the control segment 410. The pointer 406 may be compact and may be sent in the DL-MAP message 208.

Figure 4 shows a design of a control structure 400 for sending control information 302. In this design, a pointer 406 may be defined for a control segment 410 and may be sent in a pointer field 412 of the DL-MAP message 408. The control segment 410 may carry control information 302 for mobile stations 120 and/or base stations 110 and, in the design shown in Figure 4, may be sent in a downlink burst 414. The pointer 406 may identify the location of the control segment 410, the size of the control segment 410, etc. The control segment 410 may be sent in different downlink bursts 414 and/or locations in different frames 402. The control segment 410 may also have a configurable size, which may be determined based on the amount of control information 302 being sent in the frame 402.

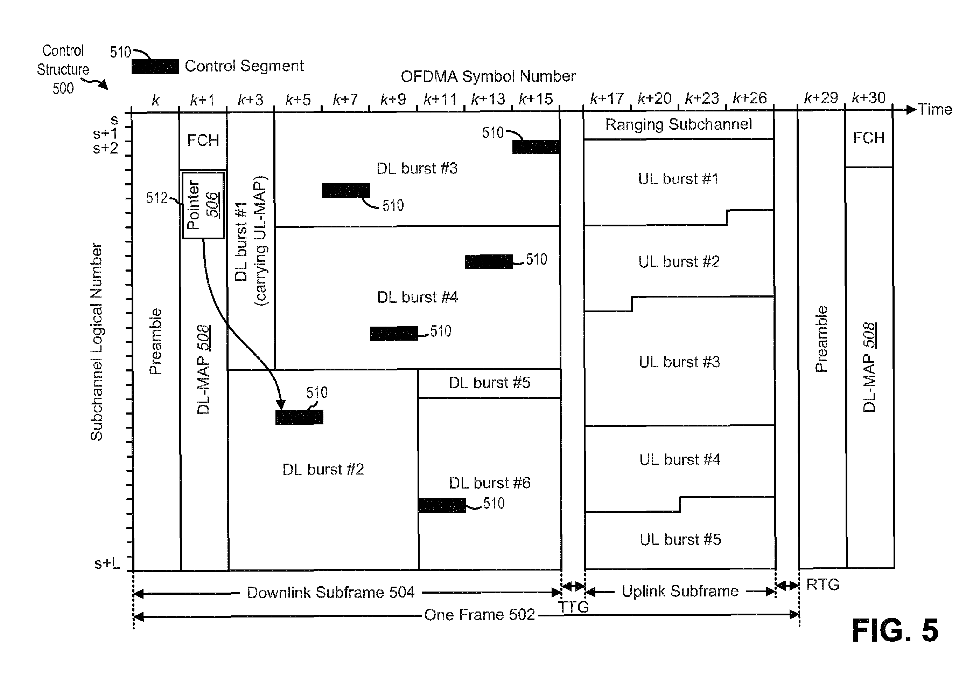

Figure 5 shows a design of a control structure 500 for sending control information 302. In this design, a pointer 506 may be defined for a control segment 510 and may be sent in a pointer field 512 of the DL-MAP message 508. The control segment 510 may carry control information 302 for mobile stations 120 and/or base stations 110 and, in the design shown in Figure 5, may be sent in different locations of the downlink subframe 504. The pointer 506 may identify the starting location of the control segment 510, the manner in which the control segment 510 is sent, the size of the control segment 510, etc. The control segment 510 may hop across subchannels in the downlink subframe 504 based on a hopping pattern that may be known a priori by the mobile stations 120 or may be conveyed by the pointer 506. The control segment 510 may have different permutations compared to traffic data, e.g., may hop across the entire system bandwidth. The control segment 510 may puncture (or overwrite) traffic data wherever the control segment 510 collides with the downlink bursts 504. The control segment 510 may also have a configurable size, which may be determined based on the amount of control information 302 being sent in the frame 502.

Figures 4 and 5 show two designs for sending a control segment 410. A control segment 410 may also be sent in other manners. For example, multiple control segments 410 may be sent in one downlink burst 414.

In general, a control segment 410 may be a set of subchannels or a set of subcarriers in one or more OFDM symbols, a permutation zone, or some other resource units. A control segment 410 may be for a physical layer, a Medium Access Control (MAC) layer, etc. A control segment 410 may be static, semi-static, or dynamically varying (e.g., from frame 402 to frame 402). A control segment 402 may also have any size, which may be determined by the amount of control information 302 being sent. Resources may be adaptively allocated for the control segment 410.

A control segment 410 may have any format, which may be dependent on the type of control information 302 being sent. In one design, a control segment 410 may include S slots, where each slot may have a predetermined time and frequency dimension. For example, a slot may correspond to one logical subchannel by one or two OFDM symbols. As another example, a slot may correspond to a predetermined number of modulation symbols. Each slot may be used to carry control information 302 for one mobile station 120 or a group of mobile stations 120. A slot may also be referred to as a logical channel, a control block, etc. A control segment 410 may also have other formats, some examples of which are described below.

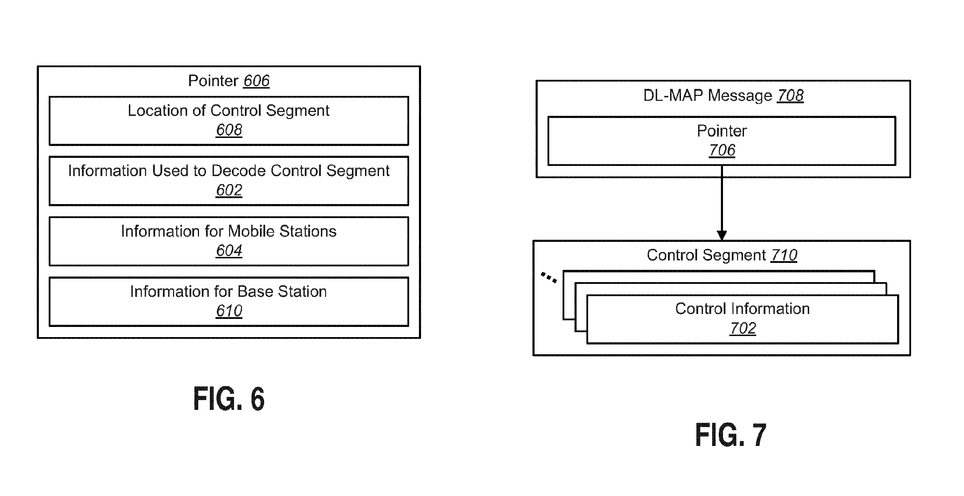

Reference is now made to Figure 6. In general, a pointer 606 for a control segment 410 may convey any information used to receive the control segment 410. For example, referring to Figure 6, the pointer 606 may convey one or more of the following: the location 608 of the control segment 410 in a downlink subframe 204; information 602 used to decode the control segment 410; and information 604 for mobile stations 120 and/or information 610 for base stations 110 mapped to the control segment 410.

The pointer 606 may convey the location 608 of the control segment 410 in the downlink subframe 204. This information may be given by coordinates of logical resources (e.g., a subchannel index and an OFDM symbol index), indices of physical resources or channels, or other mapping functions used to identify resources for the control segment 410.

The pointer 606 may convey information 602 used to decode the control segment 410, e.g., the coding and modulation scheme for the control segment 410. This information may also be pre-negotiated between a base station 110 and mobile stations 120, or sent in a header of the control segment 410, or conveyed in other manners.

The pointer 606 may convey information 604 for one or more mobile stations 120, i.e., information identifying which mobile stations 120 will or may receive control information 302 in the control segment 410. This information may be in the form of a connection identifier (CID) or a MAC identifier (MACID) assigned to a mobile station 120, or some other type of identifier. A CID may identify a transport connection or an uplink/downlink pair for a mobile station 120. This information may also be sent in the control segment 410 or provided in other manners. The pointer 606 may convey information mapping the mobile stations 120 to different locations of the control segment 410. This information may also be pre-configured, determined based on a known mapping, sent in the header of the control segment 410, or conveyed in other manners.

The pointer 606 may also carry control information 302 for one or more base stations 110. The pointer 606 may convey information identifying the base station(s) 110 whose control information 302 is sent in the control segment 410. This information may be in the form of a base station ID, a cell ID, a sector ID, a PN code, or some other type of identifier. This information may also be pre-configured or conveyed in other manners.

In one design, different control segments 410 may be used to send different types of control information 302, such as: power control information 304 (which may be used to adjust transmit power of mobile stations 120), interference management information 310 (which may be used to adjust transmit power of mobile stations 120 to mitigate inter-cell/sector interference), paging information 308 (which may be used to notify mobile stations 120 of page messages), and handoff information 306 (which may be used to support handoff for mobile stations 120).

Each control segment 410 may have any format and size suitable for the type of control information 302 being sent in that control segment 410. Each control segment 410 may be sent as shown in Figure 4 or Figure 5 or in some other manner. In one design, one pointer 406 may be defined for each control segment 410 and may include pertinent information to receive that control segment 410. In another design, one pointer 406 may be used for all control segments 410. In any case, the pointer(s) 406 for all control segments 410 may be sent in the DL-MAP message 408.

Referring to Figure 7, in one design, a single control segment 710 may carry different types of control information 702. A pointer 706 may be defined for the control segment 710 and may be sent in the DL-MAP message 708.

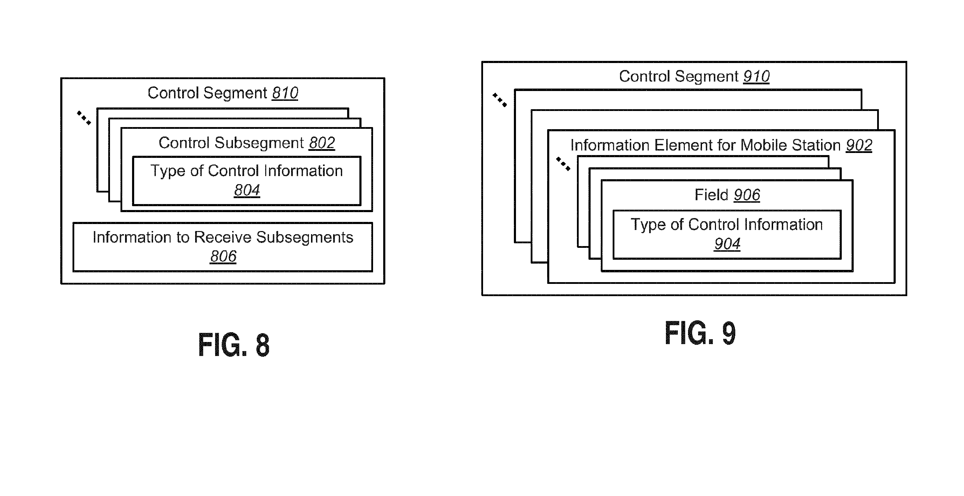

Referring to Figure 8, in one design, a control segment 810 may be partitioned into multiple control subsegments 802, e.g., one subsegment 802 for each type of control information 804. Each type of control information 804 may be sent in the associated control subsegment 802. The control segment 810 may include information 806 to receive the different control subsegments 802.

Referring to Figure 9, in one design, a control segment 910 may include an information element 902 for each mobile station 120 receiving any control information 904. The information element 902 for each mobile station 120 may include different fields 906 for different types of control information 904 being sent to that mobile station 120.

For clarity, some example designs of control segments 410 for different types of control information 302 are described below.

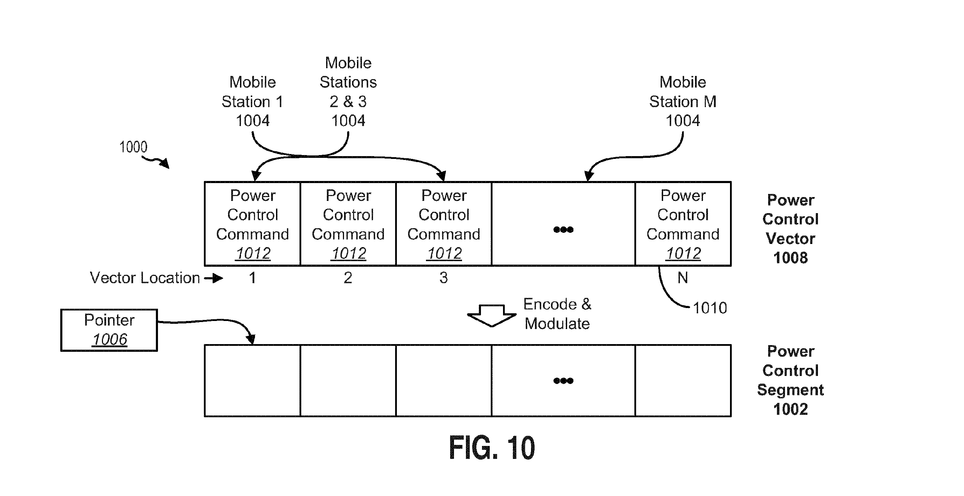

Reference is now made to Figure 10. In accordance with an aspect of the present disclosure, an efficient power control scheme may adaptively allocate resources for a control segment 410 carrying power control information 304, which may be referred to as a power control segment 1002. The power control segment 1002 may be associated with a pointer 1006 sent in the DL-MAP message 208. The power control segment 1002 may carry power control information 304 for any number of mobile stations 120 using unicast, multicast, and/or broadcast schemes.

Figure 10 shows a design 1000 of a power control segment 1002. In this design, a power control vector 1008 of N elements/locations 1010 may be defined, where N may be any value and may be dynamically configurable. The N vector locations 1010 may also be referred to as N power control subchannels. M mobile stations 1004 may be mapped to the N vector locations 1010, where M may also be any value. A single mobile station 1004 may be mapped to one vector location 1010 for unicast, and multiple mobile stations 1004 may be mapped to one vector location 1010 for multicast. The mapping of the M mobile stations 1004 to the N vector locations 1010 may be pre-negotiated, conveyed by the pointer 1006 or in the power control segment 1002, or determined in some other manner. In one design, each mobile station 1004 is mapped to a vector location 1010 based on a hash of its CID and/or other input parameters such as a frame index or based on some other function of one or more input parameters.

Each vector location 1010 may carry a power control command 1012 for one or more mobile stations 1004 mapped to that vector location 1010. A power control command 1012 may be a single bit, e.g., to increase or decrease transmit power by a predetermined amount. A power control command 1012 may also comprise multiple bits, e.g., to increase or decrease transmit power by a specified amount.

In one design, each power control command 1012 may be encoded separately. In this design, each mobile station 1004 may decode the power control command 1012 in the vector location 1010 to which the mobile station 1004 is mapped. In another design, the N power control commands 1012 may be jointly encoded, e.g., with a block code. In this design, each mobile station 1004 may perform block decoding for the power control segment 1002 and then extract the power control command 1012 from the vector location 1010 to which the mobile station 1004 is mapped. For both designs, encoded power control information 304 may be sent in the power control segment 1002, which may be mapped to resources allocated to the power control segment 1002, e.g., as shown in Figure 4 or in Figure 5.

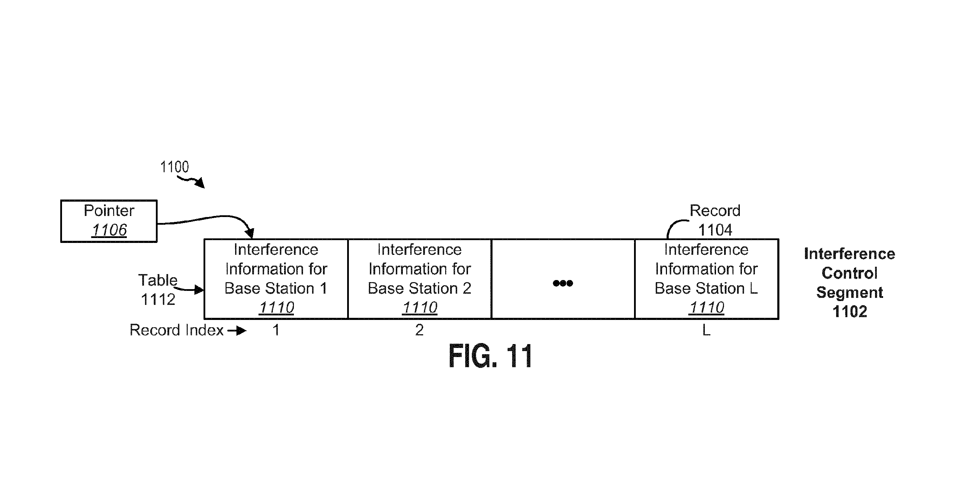

Reference is now made to Figure 11. In accordance with another aspect of the present disclosure, an efficient interference management scheme may adaptively allocate resources for a control segment 410 carrying interference management information 1110, which may be referred to as an interference control segment 1102. The interference control segment 1102 may be associated with a pointer 1106 sent in the DL-MAP message 208. The interference control segment 1102 may carry interference management information 1110 for any number of base stations 110 and/or any number of mobile stations 120. The interference management information 1110 may comprise any information that may be used to mitigate interference. The interference management information 1110 may be for a base station 110 transmitting the information, for one or more neighbor base stations 110 of the transmitting base station 110, for one or more mobile stations 120 causing high interference at the transmitting or neighbor base station 110, etc. The interference management information 1110 may be sent using unicast, multicast, and/or broadcast schemes.

Figure 11 shows a design 1100 of an interference control segment 1102. In this design, a table 1112 of L records 1104 may be defined, where L may be any value and may be dynamically configurable. Each record 1104 may store interference management information 1110 for a base station 110. The mapping of L base stations 110 to the L records 1104 may be pre-negotiated, conveyed by the pointer 1106 or in the interference control segment 1102, or determined in some other manner.

In one design, the interference management information 1110 may indicate measured and/or target interference levels at the transmitting and/or neighbor base stations 110. Each base station 110 may estimate the interference observed by that base station 110, e.g., due to mobile stations 120 communicating with neighbor base stations 110. The estimated interference level may be given by units of decibel (dBm) over thermal, actual dBm, or some level other than thermal noise. Each base station 110 may broadcast its measured and/or target interference levels in the interference control segment 1102 and/or pass this information to the neighbor base stations 110. Each base station 110 may broadcast the measured and/or target interference levels for its neighbor base stations 110 in the interference control segment 1102 to its mobile stations 120. The mobile stations 120 may adjust their transmit power to avoid causing excessive interference to the neighbor base stations 110.

In another design, the interference management information 1110 may identify specific mobile stations 120 causing high interference. A base station 110 may observe high interference from one or more mobile stations 120 and may identify the interfering mobile station(s) 120. The base station 110 may send a list of interfering mobile station(s) 120 to neighbor base stations 110. A neighbor base station 110 serving any of the interfering mobile station(s) 120 may send interference management information 1110 in the interference control segment 1102 to request the interfering mobile station(s) 120 to reduce transmit power. The interference management information 1110 may thus be passed to specific base stations 110 to control mobile stations 120 served by these base stations 110.

In another design, the interference management information 1110 may convey traffic loading at the transmitting and/or neighbor base stations 110. For example, the interference management information 1110 may convey a loading metric such as guaranteed throughput and latency target of admitted quality of service (QoS) traffic, the number of mobile stations 120 with QoS traffic served by the base station 110, etc.

The interference management information 1110 may be derived based on a mapping function that maps input parameters (e.g., interference levels, traffic loading, etc.) to output values. The mapping function may be a ramp, a quantizer, a saturation function, a differential function, etc.

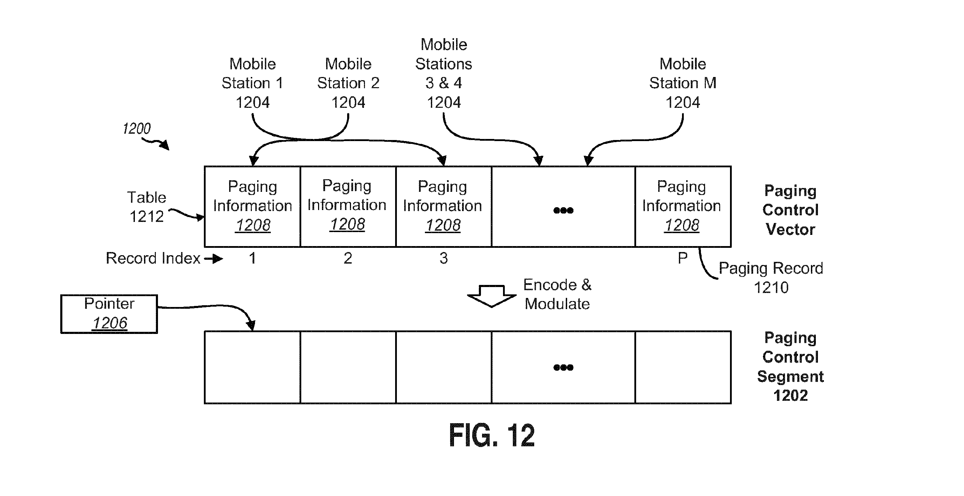

Reference is now made to Figure 12. In accordance with another aspect of the present disclosure, an efficient paging scheme 1200 may adaptively allocate resources for a control segment 410 carrying paging information 1208, which may be referred to as a paging control segment 1202. The paging control segment 1202 may be associated with a pointer 1206 sent in the DL-MAP message 208. The paging control segment 1202 may carry paging information 1208 for any number of mobile stations 1204 and may comprise any information that may be used to facilitate paging of the mobile stations 1204. The paging information 1208 may be sent using unicast, multicast, and/or broadcast schemes.

Figure 12 shows a design of a paging control segment 1202. In this design, a table 1212 of P paging records 1210 may be defined, where P may be any value and may be dynamically configurable. Each paging record 1210 may carry paging information 1208 for one or multiple mobile stations 1204 mapped to that paging record 1210. The mapping of the mobile stations 1204 to the paging records 1210 may be pre-negotiated, conveyed by the pointer 1206 or in the paging control segment 1202, or determined in some other manner.

While in an idle mode, a mobile station 1204 may be powered down for much of the time to conserve battery. The mobile station 1204 may be assigned specific frames 402 in which the mobile station 1204 may receive paging information 1208. These frames 402 may be referred to as assigned frames 402. The mobile station 1204 may sleep for much of the time between the assigned frames 402, and may wake up in each assigned frame 402 to receive paging information 1208. The paging information 1208 may indicate whether the mobile station 1204 will or might receive a page message in the current frame 402.

In one design, the paging information 1208 may comprise the CID of each mobile station 1204 being paged. In this design, the P paging records 1210 may carry P CIDs for P mobile stations 1204 being paged. A mobile station 1204 may decode the paging control segment 1202 for an assigned frame 402 and look for its CID. The mobile station 1204 may go back to sleep if its CID is not detected in the paging control segment 1202 and may decode a paging channel for a page message if its CID is detected.

In another design, the paging information 1208 may comprise P quick paging indicators. In this design, a mobile station 1204 may be mapped to one of the P quick paging indicators based on a known mapping function, e.g., a hash function. Each quick paging indicator may be set (i) to 1 if any mobile station 1204 mapped to that indicator is being paged or (ii) to 0 if no mobile stations 1204 mapped to that indicator are being paged. A mobile station 1204 may decode the paging control segment 1202 for an assigned frame 402 and detect the quick paging indicator to which the mobile station 1202 is mapped. The mobile station 1202 may go back to sleep if its quick paging indicator is set to 0 and may decode the paging channel for a page message if its quick paging indicator is set to 1.

In general, different control segments 410 may be sent for different types of control information 302. The control segment 410 for a particular type of control information 302 may or may not be sent in a given frame 402. In one design, the pointer 406 for a control segment 410 may be sent in the DL-MAP message 408 if that control segment 410 is being sent or may be omitted if the control segment 410 is not being sent. The mobile stations 120 may determine whether or not a given control segment 410 is being sent based on the presence or absence of the control segment's pointer 406 in the DL-MAP message 408.

Sending a control segment 410 with a pointer 406 in the DL-MAP message 408 may provide certain advantages. First, the size of the DL-MAP message 408 may be reduced since the control information 302 may be sent in the control segment 410 instead of the DL-MAP message 408. This may reduce the amount of information that a base station 110 sends to all mobile stations 120 and also the amount of information that all mobile stations 120 need to decode. Second, the control segment 410 may be more efficiently sent in the remainder of the downlink subframe 204. For example, a base station 110 may share power and distribute its total transmit power unevenly to give more power to subcarriers carrying control information 302 and less power to subcarriers carrying traffic data. The control segment 410 may also be sent with frequency hopping to achieve more diversity. The control segment 410 may also be sent with more efficient multiplexing schemes. For example, multiple control subchannels may be code division multiplexed over a common set of physical resources.

A mobile station 120 may perform hard handoff from a serving base station 110 to a target base station 110. For hard handoff, the mobile station 120 may break a connection with the serving base station 110 before establishing a connection with the target base station 110. Connection establishment may include (i) establishing a logical connection and receiving logical resources and (ii) establishing a physical/radio connection and receiving physical/radio resources. The logical resources may include a CID, a MACID, a code, etc. The code may be an orthogonal code, a pseudo-random code, or some other code used for transmission. The physical/radio resources may include resources for sending data, resources in the control segments 410, etc.

In accordance with another aspect of the present disclosure, a mobile station 120 may establish a logical connection with one or more potential target base stations 110 in preparation or anticipation of hard handoff to any one of the base station(s) 110. A potential target base station 110 may be identified by downlink signal strength or some other measurements. For example, a potential target base station 110 may assign and maintain logical resources such as a CID/MACID and a code for the mobile station 120. The request, allocation and release of the logical resources may be negotiated between the mobile station 120 and the potential target base station 110, either directly or via the serving base station 110 (or serving base stations 110 if different base stations 110 are serving the mobile station 120 for the downlink and uplink). Establishing a logical connection with the potential target base station(s) 110 may speed up the hard handoff process. The potential target base station(s) 110 may assign no physical/radio resources to the mobile station 120 in order to conserve these resources.

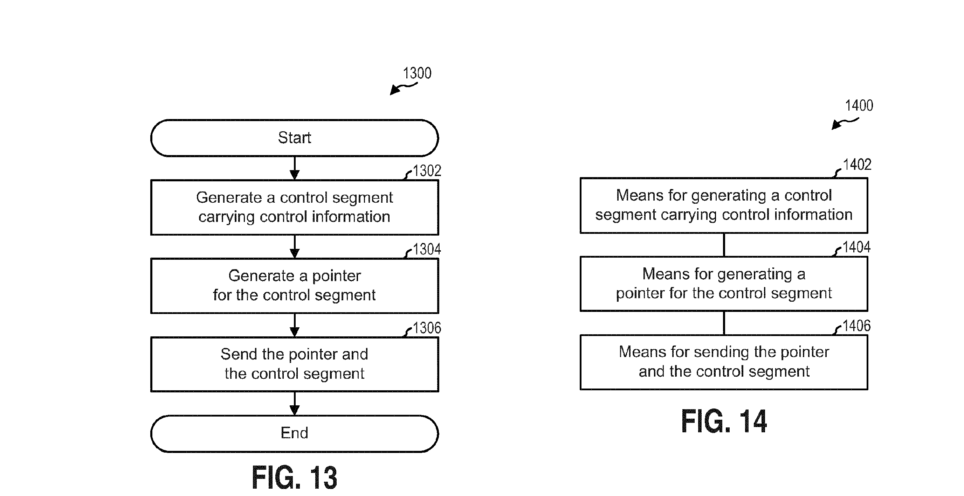

Figure 13 shows a design of a method 1300 for sending control information 302. The method 1300 may be performed by a base station 110 for the downlink or a mobile station 120 for the uplink. A control segment 410 carrying control information 302 may be generated 1302. The control information 302 may comprise power control information 304, interference management information 310, paging information 308, etc. The control segment 410 may comprise at least one slot, with each slot corresponding to predetermined amount of resources and being usable to send control information 302 for a mobile station 120 or a group of mobile stations 120. The control segment 410 may also have different formats for different types of control information 302.

A pointer 406 for the control segment 410 may be generated 1304. The pointer 406 may indicate the location of the control segment 410 in a downlink subframe 204, the size of the control segment 410, etc. The pointer 406 may also comprise information to decode the control segment 410, the intended recipients of the control information 302, the sources of the control information 302, etc.

The pointer 406 and the control segment 410 may be sent 1306. The pointer 406 may be sent in a DL-MAP message 208 in a downlink subframe 204. The control segment 410 may be sent in a burst 414 in the downlink subframe 404 (e.g., as shown in Figure 4), and the pointer 406 may indicate the location of this burst 414. The control segment 510 may also be mapped to resources across a downlink subframe 504 (e.g., as shown in Figure 5), may hop across the downlink subframe 504 based on a hopping pattern, and may puncture traffic data sent in the downlink subframe 504. The pointer 406 may indicate the starting location of the control segment 410. The control segment 410 may be sent with equal or higher transmit power than the transmit power for the traffic data.

The method 1300 of Figure 13 described above may be performed by various hardware and/or software component(s) and/or module(s) corresponding to the means-plus-function blocks 1400 illustrated in Figure 14. In other words, blocks 1302 through 1306 illustrated in Figure 13 correspond to means-plus-function blocks 1402 through 1406 illustrated in Figure 14.

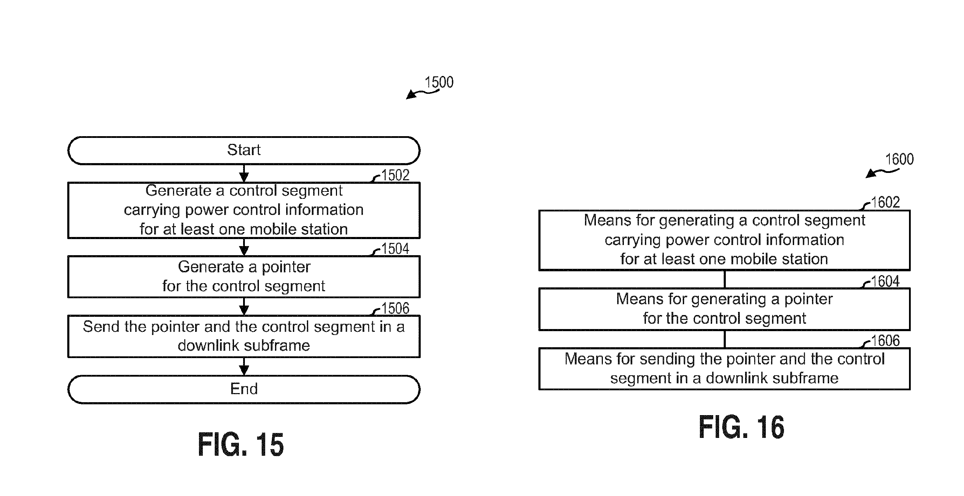

Figure 15 shows a design of a method 1500 for sending power control information 304. The method 1500 may be performed by a base station 110. A control segment 1002 carrying power control information 304 for at least one mobile station 1004 may be generated 1502. In one design, the control segment 1002 may comprise at least one message of power control information 304 for the at least one mobile station 1004. Each message may be a unicast message for one mobile station 1004 or a multicast message for multiple mobile stations 1004. In another design, the control segment 1002 may comprise a vector 1008 with at least one location 1010. At least one power control command 1012 may be generated for the at least one mobile station 1004, which may be mapped to the at least one vector location 1010 based on a predetermined mapping, e.g., a hash function. For unicast, each mobile station 1004 may be mapped to a different vector location 1010. For multicast, multiple mobile stations 1004 may be mapped to one vector location 1010. Each power control command 1012 may be encoded separately, or all power control commands 1012 may be encoded jointly. A pointer 1006 for the control segment 1002 may be generated 1504. The pointer 1006 may comprise any of the information described above. The pointer 1006 and the control segment 1002 may be sent 1506 in a downlink subframe 204. The control segment 1002 may be sent in various manners as described above.

The method 1500 of Figure 15 described above may be performed by various hardware and/or software component(s) and/or module(s) corresponding to the means-plus-function blocks 1600 illustrated in Figure 16. In other words, blocks 1502 through 1506 illustrated in Figure 15 correspond to means-plus-function blocks 1602 through 1606 illustrated in Figure 16.

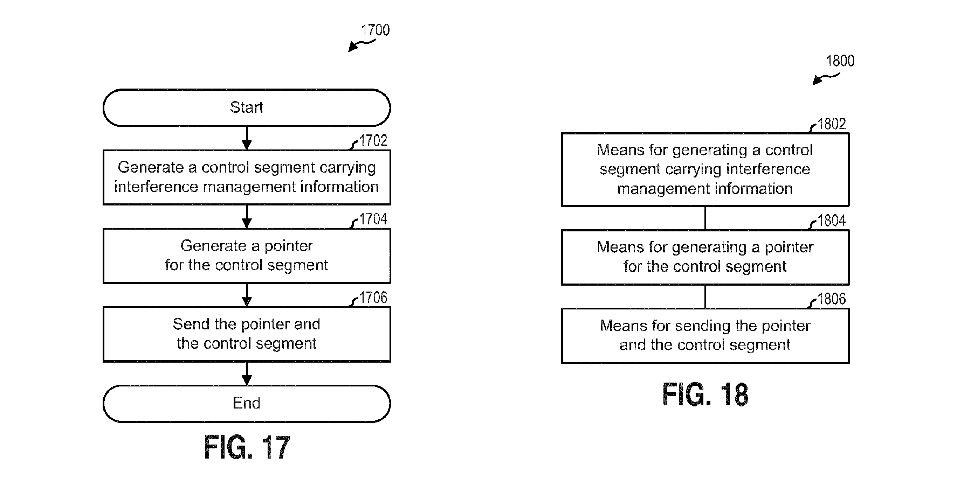

Figure 17 shows a design of a method 1700 for sending interference management information 1110. The method 1700 may be performed by a base station 110. A control segment 1102 carrying interference management information 1110 may be generated 1702. The interference management information 1110 may comprise an interference level for a base station 110 sending the control segment 1102, at least one interference level for at least one neighbor base station 110, traffic loading information for at least one base station 110, information identifying at least one mobile station 120 causing excessive interference, etc. A pointer 1106 for the control segment 1102 may be generated 1704. The pointer 1106 may comprise any of the information described above. The pointer 1106 and the control segment 1102 may be sent 1706 in a downlink subframe 204. The control segment 1102 may be sent in various manners as described above.

The method 1700 of Figure 17 described above may be performed by various hardware and/or software component(s) and/or module(s) corresponding to the means-plus-function blocks 1800 illustrated in Figure 18. In other words, blocks 1702 through 1706 illustrated in Figure 17 correspond to means-plus-function blocks 1802 through 1806 illustrated in Figure 18.

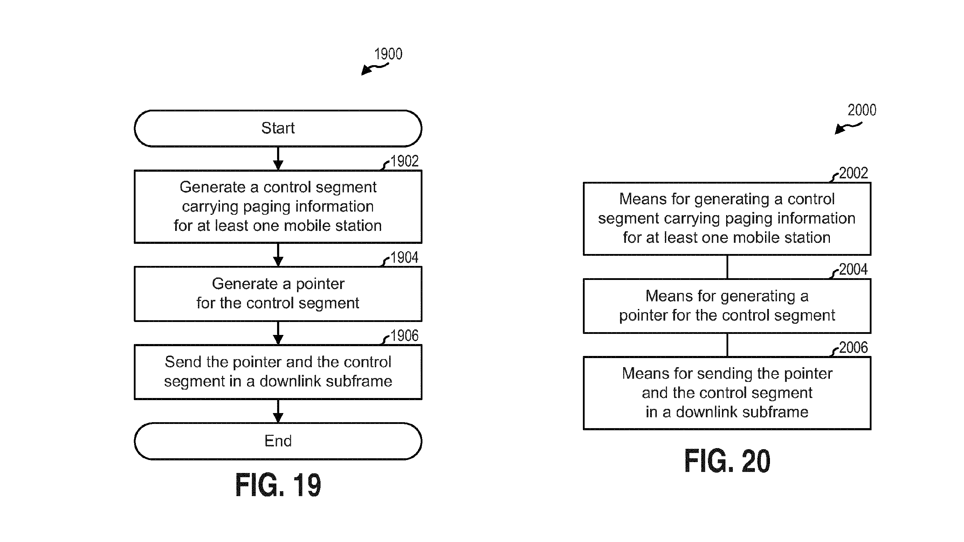

Figure 19 shows a design of a method 1900 for sending paging information 1208. The method 1900 may be performed by a base station 110. A control segment 1202 carrying paging information 1208 for at least one mobile station 1204 may be generated 1902. In one design, the control segment 1202 may comprise an identifier of each mobile station 1204 being paged. In another design, the control segment 1202 may comprise multiple paging indicators. Each paging indicator may be set (i) to a first value if at least one mobile station 1204 being paged is mapped to that paging indicator or (ii) to a second value if no mobile stations 1204 being paged are mapped to the paging indicator. A pointer 1206 for the control segment 1202 may be generated 1904. The pointer 1206 may comprise any of the information described above. The pointer 1206 and the control segment 1202 may be sent 1906 in a downlink subframe 204. The control segment 1202 may be sent in various manners as described above.

The method 1900 of Figure 19 described above may be performed by various hardware and/or software component(s) and/or module(s) corresponding to the means-plus-function blocks 2000 illustrated in Figure 20. In other words, blocks 1902 through 1906 illustrated in Figure 19 correspond to means-plus-function blocks 2002 through 2006 illustrated in Figure 20.

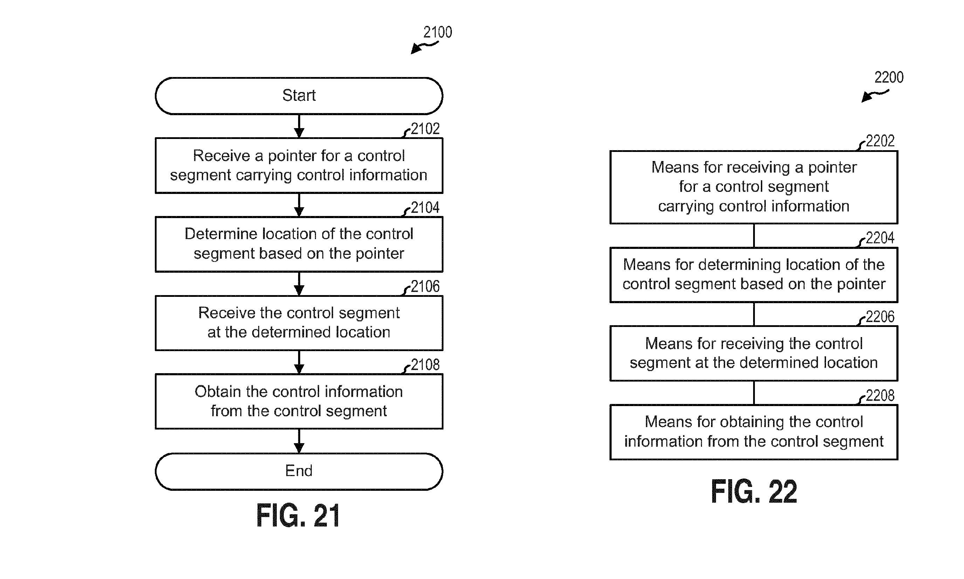

Figure 21 shows a design of a method 2100 for receiving control information 302. The method 2100 may be performed by a mobile station 120 for the downlink or a base station 110 for the uplink. A pointer 406 for a control segment 410 carrying control information 302 may be received 2102. The location of the control segment 410 (and possibly other characteristics of the control segment 410) may be determined 2104 based on the pointer 406. The control segment 410 may be received 2106 at the determined location. The control information 302 may be obtained 2108 from the control segment 410.

The control information 302 may comprise power control commands 1012 for at least one mobile station 120. A power control command 1012 for a mobile station 120 may be obtained from the control segment 410. Transmit power of the mobile station 110 may be adjusted based on the power control command 1012. The control information 302 may comprise interference management information 310, e.g., interference level, traffic loading, etc., for one or more base stations 110. The transmit power of the mobile station 120 may be adjusted based on the interference management information 310. The control information 302 may comprise paging information 308 for mobile stations 120 being paged. Whether to receive a page message may be determined based on the paging information 308.

The method 2100 of Figure 21 described above may be performed by various hardware and/or software component(s) and/or module(s) corresponding to the means-plus-function blocks 2200 illustrated in Figure 22. In other words, blocks 2102 through 2108 illustrated in Figure 21 correspond to means-plus-function blocks 2202 through 2208 illustrated in Figure 20.

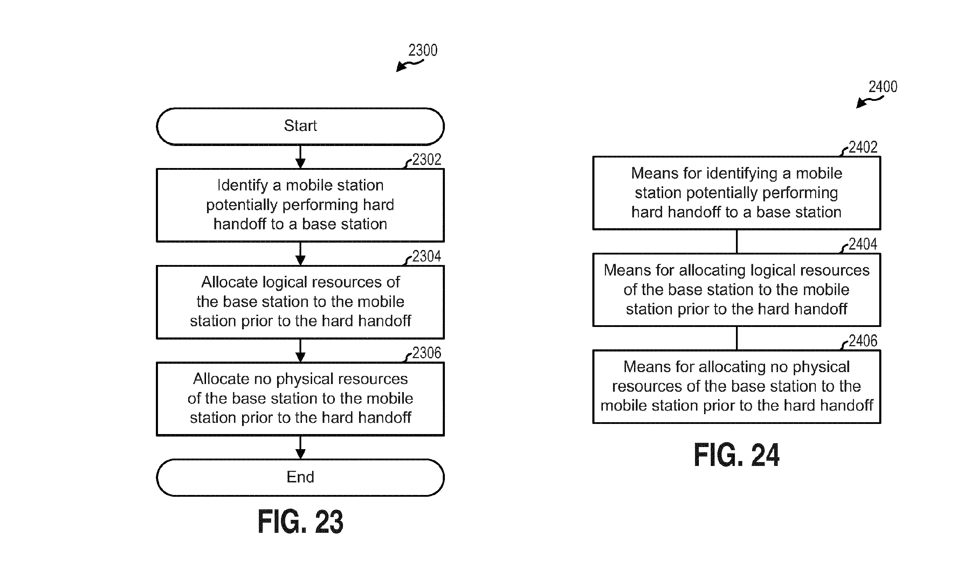

Figure 23 shows a design of a method 2300 for supporting hard handoff. The method 2300 may be performed by a potential target base station 110 for hard handoff. A mobile station 120 potentially performing hard handoff to the base station 110 may be identified 2302. Logical resources of the base station 110 may be allocated 2304 to the mobile station 120 prior to the hard handoff. The logical resources allocated to the mobile station 120 may comprise an identifier for the mobile station 120, a code used for transmission by the mobile station 120, etc. No physical resources of the base station 110 may be allocated 2306 to the mobile station 120 prior to the hard handoff to conserve physical resources.

The method 2300 of Figure 23 described above may be performed by various hardware and/or software component(s) and/or module(s) corresponding to the means-plus-function blocks 2400 illustrated in Figure 24. In other words, blocks 2302 through 2306 illustrated in Figure 23 correspond to means-plus-function blocks 2402 through 2406 illustrated in Figure 24.

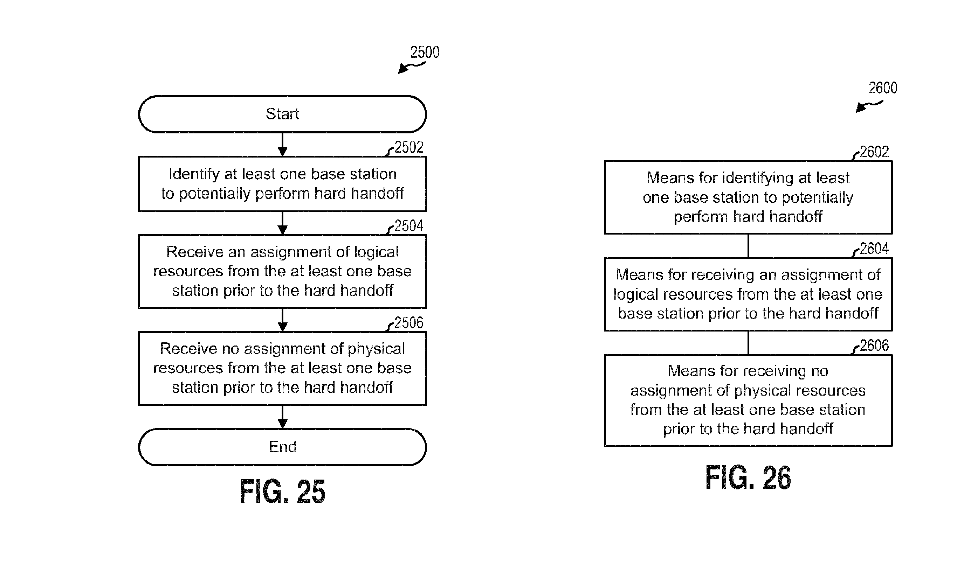

Figure 25 shows a design of a method 2500 for performing hard handoff by a mobile station 120. At least one base station 110 to potentially perform hard handoff to may be identified 2502. Assignment of logical resources may be received 2504 from the at least one base station 110 prior to the hard handoff. No assignment of physical resources may be received 2506 from the at least one base station 110 prior to the hard handoff.

The method 2500 of Figure 25 described above may be performed by various hardware and/or software component(s) and/or module(s) corresponding to the means-plus-function blocks 2600 illustrated in Figure 26. In other words, blocks 2502 through 2506 illustrated in Figure 25 correspond to means-plus-function blocks 2602 through 2606 illustrated in Figure 26.

The means-plus-function blocks in Figures 14, 16, 18, 20, 22, 24 and 26 may comprise processors, electronics devices, hardware devices, electronics components, logical circuits, memories, etc., or any combination thereof.

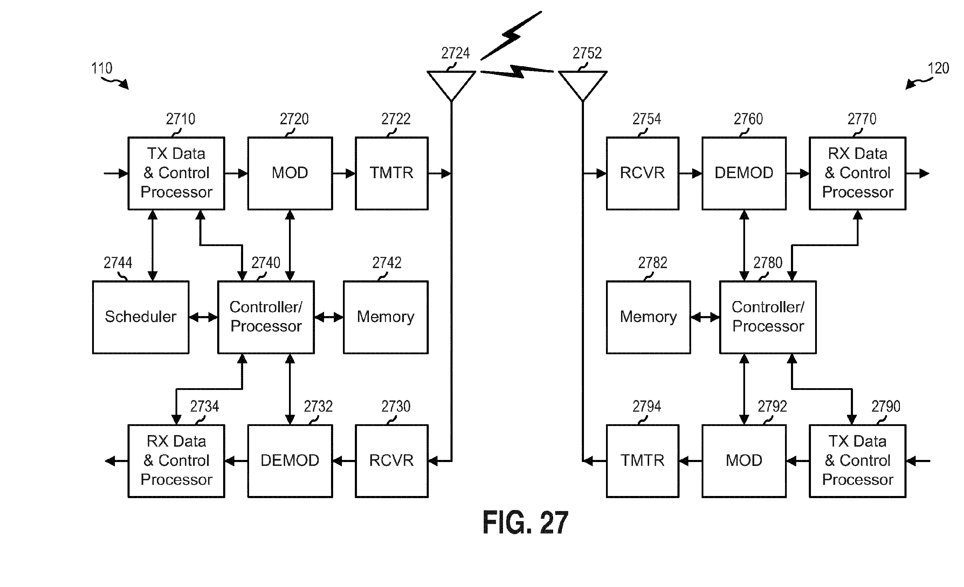

Figure 27 shows a block diagram of a design of a base station 110 and a mobile station 120, which may be one of the base stations 110 and one of the mobile stations 120 in Figure 1. At the base station 110, a transmit (TX) data and control processor 2710 may receive traffic data from a data source (not shown) and/or control information 302 from a controller/processor 2740. The processor 2710 may process (e.g., format, encode, interleave, and symbol map) the traffic data and control information 302 and provide modulation symbols. A modulator (MOD) 2720 may process the modulation symbols (e.g., for OFDM) and provide output chips. A transmitter (TMTR) 2722 may process (e.g., convert to analog, amplify, filter, and upconvert) the output chips and generate a downlink signal, which may be transmitted via an antenna 2724.

At the mobile station 120, an antenna 2752 may receive the downlink signals from the base station 110 and other base stations 110 and may provide a received signal to a receiver (RCVR) 2754. The receiver 2754 may condition (e.g., filter, amplify, downconvert, and digitize) the received signal and provide received samples. A demodulator (DEMOD) 2760 may process the received samples (e.g., for OFDM) and provide demodulated symbols. A receive (RX) data and control processor 2770 may process (e.g., symbol demap, deinterleave, and decode) the demodulated symbols to obtain decoded data and control information for the mobile station 120.

On the uplink, at the mobile station 120, data and control information to be sent by the mobile station 120 may be processed by a TX data and control processor 2790, modulated by a modulator 2792, conditioned by a transmitter 2794, and transmitted via an antenna 2752. At the base station 110, the uplink signals from the mobile station 120 and possibly other mobile stations 120 may be received by an antenna 2724, conditioned by a receiver 2730, demodulated by a demodulator 2732, and processed by an RX data and control processor 2734 to recover the data and control information sent by the mobile station 120. In general, the processing for uplink transmission may be similar to or different from the processing for downlink transmission.

Controllers/processors 2740 and 2780 may direct the operation at the base station 110 and the mobile station 120, respectively. Memories 2742 and 2782 may store data and program codes for the base station 110 and the mobile station 120, respectively. A scheduler 2744 may schedule mobile stations 120 for downlink and/or uplink transmission and may provide assignments of system resources.

The processors in Figure 27 may perform various functions for the techniques described herein. For example, the processors at the base station 110 may implement the method 1300 in Figure 13, the method 1500 in Figure. 15, the method 1700 in Figure 17, the method 1900 in Figure 19, the method 2300 in Figure 23, and/or other methods for the techniques described herein. The processor at the mobile station 120 may implement the method 2100 in Figure 21, the method 2500 in Figure 25, and/or other methods for the techniques described herein.

The techniques described herein may be implemented by various means. For example, these techniques may be implemented in hardware, firmware, software, or a combination thereof. For a hardware implementation, the processing units used to perform the techniques may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, a computer, or a combination thereof.

For a firmware and/or software implementation, the techniques may be implemented with modules (e.g., procedures, functions, etc.) that perform the functions described herein. The firmware and/or software instructions may be stored in a memory (e.g., memory 2742 or 2782 in Figure 27) and executed by a processor (e.g., processor 2740 or 2780). The memory may be implemented within the processor or external to the processor. The firmware and/or software instructions may also be stored in other processor-readable medium such as random access memory (RAM), read-only memory (ROM), non-volatile random access memory (NVRAM), programmable read-only memory (PROM), electrically erasable PROM (EEPROM), FLASH memory, compact disc (CD), magnetic or optical data storage device, etc.

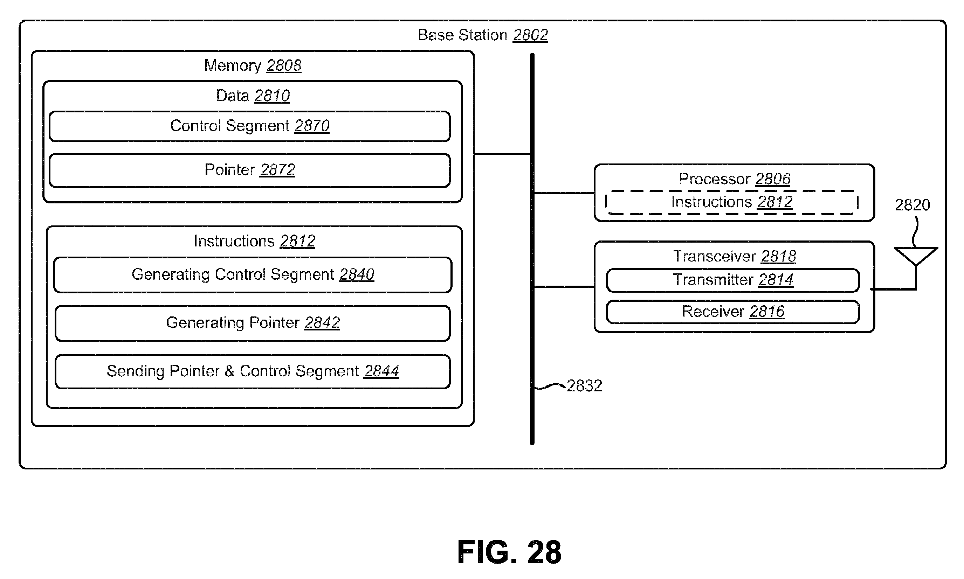

Reference is now made to Figure 28. Figure 28 illustrates an example of a base station 2802 that is configured for adaptive transmission of control information 302 in a wireless communication system 100.

The base station 2802 includes a processor 2806. The processor 2806 may be a general purpose single- or multi-chip microprocessor (e.g., an ARM), a special purpose microprocessor (e.g., a digital signal processor (DSP)), a microcontroller, a programmable gate array, etc. The processor 2806 may be referred to as a central processing unit (CPU). Although just a single processor 2806 is shown in the base station 2802 of Figure 28, in an alternative configuration, a combination of processors 2806 (e.g., an ARM and DSP) could be used.

The base station 2802 also includes memory 2808. The memory 2808 may be any electronic component capable of storing electronic information. The memory 2808 may be embodied as random access memory (RAM), read only memory (ROM), magnetic disk storage media, optical storage media, flash memory devices in RAM, on-board memory included with the processor, EPROM memory, EEPROM memory, registers, and so forth, including combinations thereof.

Data 2810 and instructions 2812 may be stored in the memory 2808. The instructions 2812 may be executable by the processor 2806 to implement various functions. Executing the instructions 2812 may involve the use of the data 2810 that is stored in the memory 2808.

The instructions 2812 in the memory 2808 may include instructions 2840 for generating a control segment 2870 carrying control information 302. The instructions 2812 in the memory 2808 may also include instructions 2842 for generating a pointer 2872 for the control segment 2870. The instructions 2812 in the memory 2808 may also include instructions 2844 for sending the pointer 2872 and the control segment 2870.

The base station 2802 may also include a transmitter 2814 and a receiver 2816 to allow transmission and reception of data between the base station 2802 to/from a remote location (e.g., one or more mobile stations 120). The transmitter 2814 and receiver 2816 may be collectively referred to as a transceiver 2818. An antenna 2820 may be electrically coupled to the transceiver 2818. The base station 2802 may also include (not shown) multiple transmitters 2814, multiple receivers 2816, multiple transceivers 2818 and/or multiple antenna 2820.

The various components of the base station 2802 may be coupled together by one or more buses, which may include a power bus, a control signal bus, a status signal bus, a data bus, etc. For the sake of clarity, the various buses are illustrated in Figure 28 as a bus system 2832.

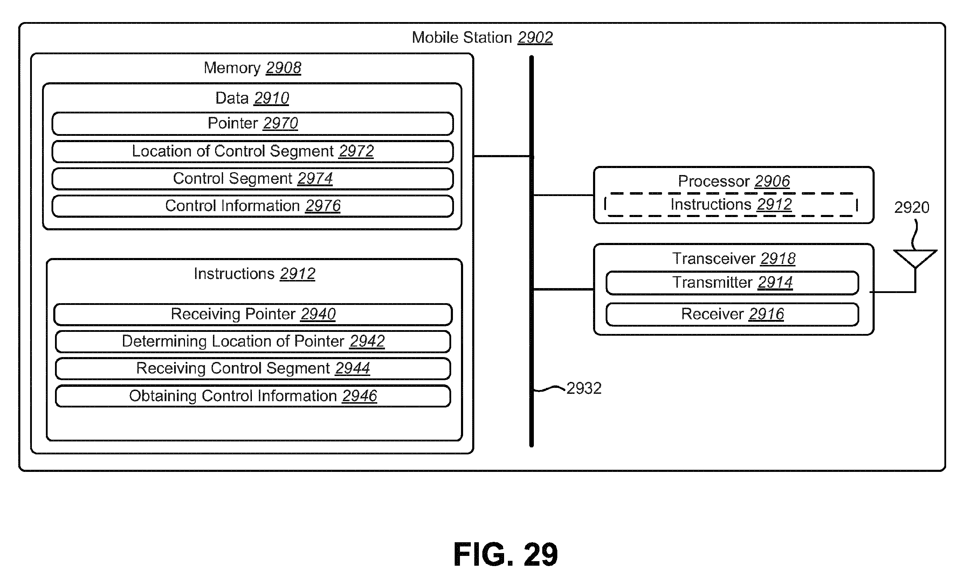

Reference is now made to Figure 29. Figure 29 illustrates an example of a mobile station 2902 that is configured to facilitate adaptive transmission of control information 302 in a wireless communication system 100.

The mobile station 2902 includes a processor 2906. The processor 2906 may be a general purpose single- or multi-chip microprocessor (e.g., an ARM), a special purpose microprocessor (e.g., a digital signal processor (DSP)), a microcontroller, a programmable gate array, etc. The processor 2906 may be referred to as a central processing unit (CPU). Although just a single processor 2906 is shown in the mobile station 2902 of Figure 29, in an alternative configuration, a combination of processors 2906 (e.g., an ARM and DSP) could be used.

The mobile station 2902 also includes memory 2908. The memory 2908 may be any electronic component capable of storing electronic information. The memory 2908 may be embodied as random access memory (RAM), read only memory (ROM), magnetic disk storage media, optical storage media, flash memory devices in RAM, on-board memory included with the processor, EPROM memory, EEPROM memory, registers, and so forth, including combinations thereof.

Data 2910 and instructions 2912 may be stored in the memory 2908. The instructions 2912 may be executable by the processor 2906 to implement various functions. Executing the instructions 2912 may involve the use of the data 2910 that is stored in the memory 2908.

The instructions 2912 in the memory 2908 may include instructions 2940 for receiving a pointer 2970 for a control segment 2974 carrying control information 2976. The instructions 2912 in the memory 2908 may also include instructions 2942 for determining the location 2972 of the control segment 2974 based on the pointer 2970. The instructions 2912 in the memory 2908 may also include instructions 2944 for receiving 2944 the control segment 2974 at the determined location 2972. The instructions 2912 in the memory 2908 may also include instructions 2946 for obtaining 2946 the control information 2976 from the control segment 2974.

The mobile station 2902 may also include a transmitter 2914 and a receiver 2916 to allow transmission and reception of data between the mobile station 2902 to/from a remote location (e.g., one or more base stations 110). The transmitter 2914 and receiver 2916 may be collectively referred to as a transceiver 2918. An antenna 2920 may be electrically coupled to the transceiver 2918. The mobile station 2902 may also include (not shown) multiple transmitters 2914, multiple receivers 2916, multiple transceivers 2918 and/or multiple antenna 2920.

The various components of the mobile station 2902 may be coupled together by one or more buses, which may include a power bus, a control signal bus, a status signal bus, a data bus, etc. For the sake of clarity, the various buses are illustrated in Figure 29 as a bus system 2932.

As used herein, the term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

The phrase "based on" does not mean "based only on," unless expressly specified otherwise. In other words, the phrase "based on" describes both "based only on" and "based at least on."

As used herein, the terms "code" and "instructions" should be interpreted broadly to include any type of computer-readable statement(s). For example, the terms "code" and "instructions" may refer to one or more programs, routines, sub-routines, functions, procedures, etc.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device, discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core or any other such configuration.

The steps of a method or algorithm described in connection with the present disclosure may be embodied directly in hardware, in a software module executed by a processor or in a combination of the two. A software module may reside in any form of storage medium that is known in the art. Some examples of storage media that may be used include RAM memory, flash memory, ROM memory, EPROM memory, EEPROM memory, registers, a hard disk, a removable disk, a CD-ROM and so forth. A software module may comprise a single instruction, or many instructions, and may be distributed over several different code segments, among different programs and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in software, the functions may be stored as instructions or as one or more sets of instructions on a computer-readable medium or storage medium. A computer-readable medium may be any available medium that can be accessed by a computer or by one or more processing deivces. By way of example, and not limitation, a computer-readable medium may comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray^{®} disc where disks usually reproduce data magnetically, while discs reproduce data optically with lasers.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein, such as those illustrated by Figures 13, 15, 17, 19, 21, 23 and 25, can be downloaded and/or otherwise obtained by a mobile station and/or base station as applicable. For example, such a device can be coupled to a server to facilitate the transfer of means for performing the methods described herein. Alternatively, various methods described herein can be provided via a storage means (e.g., random access memory (RAM), read only memory (ROM), a physical storage medium such as a compact disc (CD) or floppy disk, etc.), such that a mobile station and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the systems, methods, and apparatus described herein without departing from the scope of the claims.

In the following further aspects of the invention are described to facilitate the understanding of the invention.

In one further aspect, base station is described that is configured for adaptive transmission of control information in a wireless communication system, comprising a processor, memory in electronic communication with the processor and instructions stored in the memory, the instructions being executable by the processor to generate a control segment carrying control information, wherein the control segment has a configurable size, generate a pointer for the control segment, wherein the pointer indicates a location of the control segment in a downlink subframe, and wherein the pointer also indicates a size of the control segment and send the pointer and the control segment. Thereby, the pointer may be sent in a downlink map (DL-MAP) message in the downlink subframe. Further, the pointer may also comprise information to decode the control segment. The control segment may be sent in a burst in a downlink subframe, and the pointer may indicate a location of the burst. Further, the control segment may be sent in resources across a downlink subframe, and the pointer may indicate a starting location of the control segment. Further, the control segment may hop across the downlink subframe based on a hopping pattern. The control segment may puncture data sent in the downlink subframe. Also, the control segment may comprise at least one slot, each slot corresponding to predetermined amount of resources and being usable to send control information for a mobile station or a group of mobile stations. Further, the control segment and data may be sent in the downlink subframe, and the control segment may be sent with higher transmit power than the data.

In another aspect, a method for adaptive transmission of control information in a wireless communication system is described, the method comprising generating a control segment carrying control information, wherein the control segment has a configurable size, generating a pointer for the control segment, wherein the pointer indicates a location of the control segment in a downlink subframe, and wherein the pointer also indicates a size of the control segment and sending the pointer and the control segment.

In yet another aspect, a base station is described that is configured for adaptive transmission of control information in a wireless communication system, comprising means for generating a control segment carrying control information, wherein the control segment has a configurable size, means for generating a pointer for the control segment, wherein the pointer indicates a location of the control segment in a downlink subframe, and wherein the pointer also indicates a size of the control segment and means for sending the pointer and the control segment.

In another aspect, a computer-program product for adaptive transmission of control information in a wireless communication system is described, the computer-program product comprising a computer readable medium having instructions thereon, the instructions comprising code for generating a control segment carrying control information, wherein the control segment has a configurable size, code for generating a pointer for the control segment, wherein the pointer indicates a location of the control segment in a downlink subframe, and wherein the pointer also indicates a size of the control segment and code for sending the pointer and the control segment.

In yet another aspect, a base station is described that is configured for adaptive transmission of power control information in a wireless communication system, comprising a processor, memory in electronic communication with the processor and instructions stored in the memory, the instructions being executable by the processor to generate a control segment carrying power control information for at least one mobile station, generate a pointer for the control segment and send the pointer and the control segment in a downlink subframe. Thereby, the control segment may comprise a vector with at least one location, and the instructions may be executable to generate at least one power control command for the at least one mobile station, and map the at least one power control command to the at least one location of the vector based on a mapping of the at least one mobile station to the at least one location. Further, the at least one mobile station may be mapped to the at least one location of the vector based on a hash function of at least one of an identifier of a mobile station and an index of a frame in which the control segment is sent. Further, multiple mobile stations may be mapped to one location of the vector. The instructions may also be executable to separately encode each power control command.

In another aspect, a base station is described that is configured for adaptive transmission of interference management information in a wireless communication system, comprising a processor, memory in electronic communication with the processor and instructions stored in the memory, the instructions being executable by the processor to generate a control segment carrying interference management information, generate a pointer for the control segment and send the pointer and the control segment in a downlink subframe. Thereby, the interference management information may comprise an interference level for the base station. Further, the interference management information may comprise at least one interference level for at least one neighbor base station. Also, the interference management information may comprise traffic loading information for at least one base station. Further, the interference management information may comprise information identifying at least one mobile station causing excessive interference.

In yet another aspect, a base station is described that is configured for adaptive transmission of paging information in a wireless communication system, comprising a processor, memory in electronic communication with the processor and instructions stored in the memory, the instructions being executable by the processor to generate a control segment carrying paging information for at least one mobile station, generate a pointer for the control segment and send the pointer and the control segment in a downlink subframe. Thereby, the control segment may comprise an identifier of each mobile station being paged. Further, the control segment may comprise multiple paging indicators, and wherein the instructions are also executable to determine mobile stations being paged, map each of the mobile stations being paged to one of the multiple paging indicators and set each paging indicator to a first value if at least one mobile station being paged is mapped to the paging indicator or to a second value if no mobile stations being paged are mapped to the paging indicator.

In another aspect a mobile station is described that is configured to facilitate adaptive transmission of control information in a wireless communication system, comprising a processor, memory in electronic communication with the processor; and instructions stored in the memory, the instructions being executable by the processor to receive a pointer for a control segment carrying control information, determine a location of the control segment based on the pointer, receive the control segment at the determined location and obtain the control information from the control segment. Thereby, the control information may comprise at least one power control command for at least one mobile station, and the instructions may be executable to obtain a power control command for a mobile station from the control segment and adjust transmit power of the mobile station based on the power control command. Further, the control information may comprise interference management information, and the instructions may also be executable to obtain the interference management information from the control segment and adjust transmit power of a mobile station based on the interference management information. Further, the control information may comprise paging information for mobile stations being paged, and the instructions may also be executable to obtain the paging information from the control segment and determine whether to receive a page message based on the paging information.

In yet another aspect, a method for facilitating adaptive transmission of control information in a wireless communication system is described, the method comprising receiving a pointer for a control segment carrying control information, determining a location of the control segment based on the pointer, receiving the control segment at the determined location and obtaining the control information from the control segment.

In another aspect, a mobile station is described that is configured to facilitate adaptive transmission of control information in a wireless communication system, comprising means for receiving a pointer for a control segment carrying control information, means for determining a location of the control segment based on the pointer, means for receiving the control segment at the determined location and means for obtaining the control information from the control segment.

In yet another aspect, a computer-program product for facilitating adaptive transmission of control information in a wireless communication system is described, the computer-program product comprising a computer readable medium having instructions thereon, the instructions comprising code for receiving a pointer for a control segment carrying control information, code for determining a location of the control segment based on the pointer, code for receiving the control segment at the determined location and code for obtaining the control information from the control segment.

In another aspect, a base station is described that is configured for supporting hard handoff, comprising a processor, memory in electronic communication with the processor and instructions stored in the memory, the instructions being executable by the processor to identify a mobile station potentially performing hard handoff to a base station, allocate logical resources of the base station to the mobile station prior to the hard handoff and allocate no physical resources of the base station to the mobile station prior to the hard handoff.

In another aspect, a mobile station is described that is configured for supporting hard handoff, comprising a processor, memory in electronic communication with the processor and instructions stored in the memory, the instructions being executable by the processor to identify at least one base station to potentially perform hard handoff, receive assignment of logical resources from the at least one base station prior to the hard handoff and receive no assignment of physical resources from the at least one base station prior to the hard handoff.

## Claims

1. A base station (110) that is configured for supporting hard handoff, comprising:
means for identifying (2402) a mobile station (120) potentially performing hard handoff to a base station (110);
means for allocating (2404) logical resources of the base station (110) to the mobile station (120) prior to the hard handoff; and means for allocating (2406) no physical resources of the base station (110) to the mobile station (120) prior to the hard handoff.

2. A method supporting hard handoff, the method comprises:
identify (2302) a mobile station (120) potentially performing hard handoff to a base station (110);
allocate (2304) logical resources of the base station (110) to the mobile station (120) prior to the hard handoff; and
allocate (2306) no physical resources of the base station (110) to the mobile station (120) prior to the hard handoff.

3. The method of claim 2, wherein the logical resources allocated to the mobile station (120) comprise an identifier for the mobile station (120).

4. The method of claim 2, wherein the logical resources allocated to the mobile station (120) comprise a code used for transmission by the mobile station (120).

5. A mobile station (120) that is configured for supporting hard handoff, comprising:
means for identifying (2602) at least one base station (110) to potentially perform hard handoff;
means for receiving (2604) assignment of logical resources from the at least one base station (110) prior to the hard handoff; and means for receiving (2606) no assignment of physical resources from the at least one base station (110) prior to the hard handoff.

6. A method for supporting hard handoff, the method comprises:
identify (2502) at least one base station (110) to potentially perform hard handoff;
receive (2504) assignment of logical resources from the at least one base station (110) prior to the hard handoff; and
receive (2506) no assignment of physical resources from the at least one base station (110) prior to the hard handoff.

7. The method of claim 6, wherein the logical resources allocated to the mobile station (120) comprise an identifier for the mobile station (120).

8. The method of claim 6, wherein the logical resources allocated to the mobile station (120) comprise a code used for transmission by the mobile station (120).

9. A computer-program comprising computer-readable code for causing at least one computer to perform a method according to any one of the claims 2 to 4 and/or 6 to 8, when executed.
